# EUROPÄISCHE PATENTSCHRIFT

(11) **EP 0 960 463 B1**
(45) Veröffentlichungstag und Bekanntmachung des Hinweises auf die Patenterteilung: **06.05.2004**
(21) Anmeldenummer: 98909470.1
(22) Anmeldetag: 16.02.1998
(51) Int. Cl.: H02K 7/14, F04B 17/03

(54) **MOTORANGETRIEBENE EXZENTERPUMPE**
MOTOR-DRIVEN ECCENTRIC PUMP
POMPE EXCENTRIQUE ENTRAINEE PAR MOTEUR

(30) Priorität: 17.02.1997 DE 19706124
(43) Veröffentlichungstag der Anmeldung: 01.12.1999
(73) Patentinhaber: Continental Teves AG & Co. oHG, 60488 Frankfurt (DE)
(72) Erfinder: BURGDORF, Jochen, D-63075 Offenbach (DE)
(74) Vertreter: Portwich, Peter
(86) Internationale Anmeldenummer: PCT/EP1998/000875
(87) Internationale Veröffentlichungsnummer: WO 1998/036485

(56) Entgegenhaltungen:
- GB-A- 1 596 595
- US-A- 3 969 044
- US-A- 4 134 712
- US-A- 4 331 883

## Beschreibung

Die Erfindung betrifft ein motorangetriebenes Aggregat mit einer Motoreinheit und mit einer Arbeitsmaschine umfassend eine Pumpe in einem Pumpengehäuse, wobei die Motoreinheit einen drehbaren Rotor mit einer Motorwelle zum Antrieb mindestens eines Arbeitselementes aufweist, und mit einem Halteelement zur Befestigung der Motoreinheit am Pumpengehäuse.

Derartige Aggregate sind grundsätzlich bekannt und dienen vielfältigen Verwendungszwecken. Es ist beispielsweise aus der DE-OS 43 15 826 ein Motor-Pumpenaggregat bekannt geworden, bei dem ein Elektromotor an ein Gehäuse für eine Hochdruckpumpe angeflanscht ist. Der Rotor greift mit seiner Motorwelle in eine Ausnehmung des Gehäuses 1 und verfügt über einen Exzenter, welcher verschiebbare Pumpenkolben beaufschlagt. Die Motorwelle ist auf jeder Seite des Exzenters mit jeweils einem Lager in dem Gehäuse abgestützt. Darüber hinaus weist der Elektromotor noch ein drittes Lager im Bereich des Bodens des topfförmigen Elektromotorengehäuses auf. Die große Baulänge des Aggregates wird als nachteilig angesehen. Schließlich muß der Elektromotor bei diesem Aggregat einen großen Anteil an Reibungsarbeit überwinden, weil eine große Anzahl von Lagern eingesetzt ist und sich ferner aufgrund des notwendigen Lagerdurchmessers ein großer Reibradius ergibt. Zur Befestigung der Motoreinheit sind gesonderte Befestigungsschrauben erforderlich.

Zwar sind zwischenzeitlich andere Aggregate bekannt geworden, bei denen die Motorwelle lediglich auf einer Seite motorseitig gelagert ist. Ein Nachteil dieser Aggregate ist allerdings, daß das freie Ende der Motorwelle nicht ausreichend steif abgestützt ist, so daß Schwingungen und Vibrationen der Motorwelle unmittelbar über ein Lager in das Pumpengehäuse eingeleitet werden.

Aus der US 4,134,712 A ist eine motorgetriebene Brennstoffpumpe mit einer, eine Motorwelle durchgreifenden, Achse bekannt. Motorbauteile und Pumpenbauteile sind in einem gemeinsamen Gehäuse integriert vorgesehen, so daß keinerlei Notwendigkeit besteht, eine Motoreinheit an einem Pumpengehäuse zu befestigen.

Aufgabe der vorliegenden Erfindung ist es daher, ein motorangetriebenes Aggregat bereitzustellen, welches bei geringstem axialem Bauraum und geringem Gewicht eine biegesteife Lagerung der Motorwelle ermöglicht.

Diese Aufgabe wird mit den Merkmalen des Patentanspruches 1 gelöst. Durch diese Maßnahme ist eine sichere Abstützung der Motorwelle bei geringer axialer Baulänge gewährleistet.

Bei einer Ausführungsform der Erfindung nach Patentanspruch 2 durchgreift das lagernde Halteelement zumindest einen Teil des Pumpengehäuses. Dadurch stützt sich das Halteelement auch an dem Pumpengehäuse ab.

Nach Anspruch 4 ist es vorgesehen, daß das Halteelement den drehfest mit der Motorwelle verbundenen Pumpenexzenter lagert. Also wird sowohl die Motorwelle als auch der Pumpenexzenter von dem Zapfen abgestützt.

In Weiterbildung der Erfindung ist die Motorwelle rohrförmig und unter Zwischenordnung von Lagerelementen drehbar auf der Achse angeordnet. Die zwischen Motorwelle und Achse angeordneten Lagerelemente weisen einen geringen Reibradius auf und führen dadurch zu besonders geringer Reibarbeit. Darüber hinaus wirken die Lagerelemente schwingungsdämpfend.

In Weiterbildung der Erfindung ist ein Lagerelement in radialer Richtung fluchtend mit einem Kommutator angeordnet. Durch diese Maßnahme wird der radial im Bereich des Kommutators vorgesehene Raum ausgenutzt, so daß die axiale Baulänge des Aggregates stark verkürzt werden kann. Im Zusammenhang damit ist es auch möglich, ein Lagerelement in radialer Richtung fluchtend mit einer Rotorwicklung anzuordnen. Dies geschieht beispielsweise im Bereich des Bodens des topfförmigen Motorengehäuses und führt ebenfalls zu einer Verkürzung der axialen Baulänge.

Bei einer Ausführungsform der Erfindung ist die Achse mit einer ersten Lagerstelle in einer Bohrung des Pumpengehäuses und mit einer zweiten Lagerstelle an einem Boden eines Motorengehäuses gelagert. Weiterhin sind die Lagerelemente der Motorwelle und des Pumpenexzenters zwischen den Lagerstellen der Achse angeordnet, so daß die einwirkenden Kräfte zwischen den Lagerstellen der Achse angreifen. Diese Maßnahmen gewährleisten eine sichere endseitige Abstützung des Halteelementes ohne Kraftangriff an einem frei auskragenden Ende.

Bei einer Ausführungsform der Erfindung greift die Achse mit einem Bund an dem Boden des Motorengehäuses an und stützt sich mittelbar oder unmittelbar unter Zugbeanspruchung an dem Gehäuse ab. Diese Merkmale ermöglichen die Befestigung der Antriebseinheit an dem Gehäuse mit Hilfe der Achse, ohne daß zusätzliche oder separate Befestigungselemente notwendig wären.

Die Erfindung wird nachstehend anhand der Patentansprüche, der Figurenbeschreibung und der Zeichnung näher erläutert. In der Zeichnung zeigt:
- Fig. 1: Schnitt durch ein motorangetriebenes Aggregat;
- Fig. 2: Schnitt wie in Fig. 1 durch ein abgewandeltes Ausführungsbeispiel.

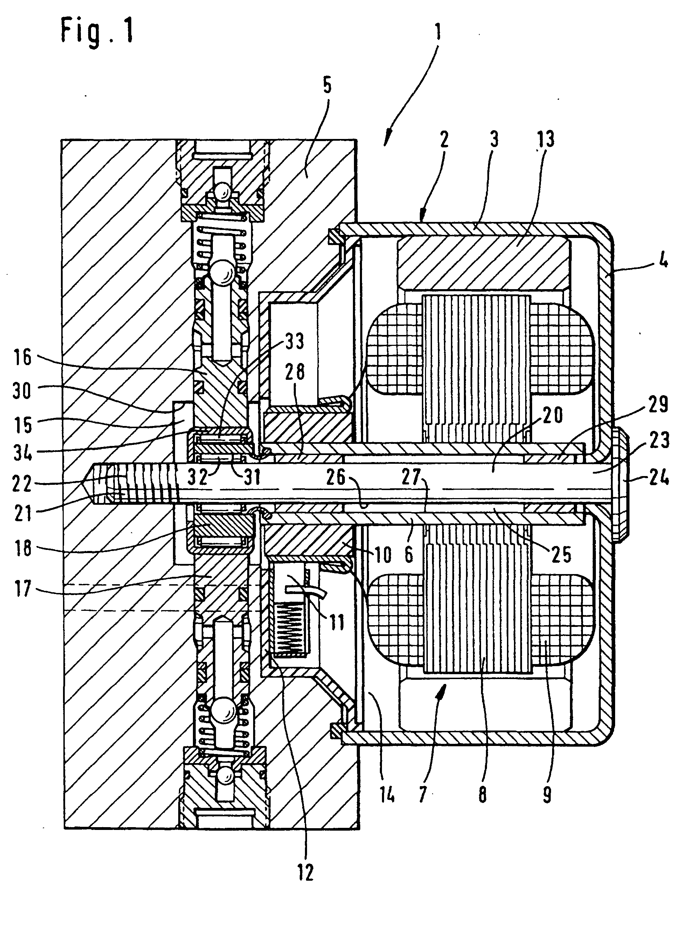

Fig. 1 zeigt ein motorangetriebenes Aggregat 1 gemäß der Erfindung. Es umfaßt eine Antriebseinheit 2, beispielsweise einen Elektromotor oder Hydraulikmotor mit einem auf mindestens einer Seite offenen Motorengehäuse 3, das beispielsweise topfförmig ist und auf einer pumpenabgewandten Seite einen Boden 4 aufweist. Das Aggregat 1 umfaßt darüber hinaus eine Arbeitsmaschine in Form einer Pumpe mit einem Pumpengehäuse 5, bei dem es sich um einen Block mit mehreren Bohrungen handelt, die u.a. auch Pumpenkolben enthalten. Es können ferner in der Figur nicht gezeichnete Ventile in dem Pumpengehäuse 5 vorgesehen sein, mit deren Hilfe eine Steuerung des durch die Pumpe hervorgerufenen Druckmittelstroms bewirkt wird.

Innerhalb des Motorengehäuses 3 befindet sich eine Motorwelle 6 mit einem Rotor 7, der einen Anker 8 sowie Wicklungen 9 aufweist. Ferner ist drehfest auf der Motorwelle 6 ein Kommutator 10 zur Stromversorgung der Wicklungen 9 angeordnet. Bürsten 11 beaufschlagen federnd den Kommutator 10 und sind bewegbar in Köchern geführt, die an einer Halteplatte 12 befestigt sind. Im Motorengehäuse 3 befinden sich ferner noch Permanentmagnete 13, die in Wechselwirkung mit den durch die Wicklungen 9 erzeugten Magnetfelder den Motor 2 antreiben.

Die Halteplatte 12 verschließt ein offenes Ende 14 des Motorengehäuses 3 und greift zumindest teilweise in eine Stufenbohrung 30 mit einer sacklochartigen Vertiefung 15 des Pumpengehäuses 5 ein. In die Vertiefung 15 ragen die Pumpenkolben 16,17, die von dem drehfest mit der Motorwelle 6 verbundenen Pumpenexzenter 18 beaufschlagt werden.

Die Lagerung der Motorwelle 6 und des Pumpenexzenters 18 geschieht wie folgt. Die Motorwelle 6 ist nach Art eines Rohrs innen hohl und wird von einem Halteelement 20 oder einer Achse durchgriffen, welche auch die Vertiefung 15 durchgreift und drehfest in dem Pumpengehäuse 5 befestigt ist. Die Motorwelle ist frei von Querkräften, die beispielsweise von der Pumpe erzeugt werden. Querkräfte werden von der Achse aufgenommen. Wie die Figur zeigt, weist die Achse an dem Ende 21 ein Gewinde 22 auf, mit dem sie in ein entsprechendes Gewinde in dem Pumpengehäuse 5 eingeschraubt ist. Mit dem anderen Ende 23 durchgreift die Achse den Boden 4 des Motorengehäuses 3 und hintergreift dieses mit einem Absatz 24. Dadurch ist die Antriebseinheit 2 sicher an dem Pumpengehäuse 5 befestigt. Gleichzeitig lagert die drehfest in das Pumpengehäuse 5 eingeschraubte Achse die Motorwelle 6 und in dem Ringraum 25 zwischen Zapfenoberfläche 26 und Welleninnenwand 27 sind im Abstand zueinander zwei Lagerelemente 28,29 vorgesehen. Die Lagerelemente sind beispielsweise Gleitlager und verfügen aufgrund ihres kleinen Durchmessers über einen geringen wirksamen Reibradius mit der Folge, daß die Reibungsarbeit gering ist. Ganz grundsätzlich sind allerdings auch Nadellager als Lagerelemente 28,29 denkbar. Das pumpenseitige Lagerelement 28 ist in radialer Richtung fluchtend zu dem Kommutator 10 angeordnet und greift zusammen mit der Motorwelle 6 und der Halteplatte 12 in die Stufenbohrung 30 des Pumpengehäuses 5 ein. Ferner lagert die Achse auch den drehfest mit der Motorwelle 6 verbundenen Pumpenexzenter 18 und zwischen Achsenoberfläche 26 und Exzenterinnenwand 31 ist ein Lagerelement 32, vorzugsweise ein Nadellager, vorgesehen. Gemäß der Figur ist ferner am Umfang des Pumpenexzenters 18 ein weiteres Lagerelement 33 vorgesehen, das unter Zwischenordnung eines Außenringes 34 die Pumpenkolben 16,17 beaufschlagt. Der Außenring 34 weist einen Boden auf und dient auch zur axialen Fixierung des Lagerelementes 32.

Das pumpenabgewandte Lagerelement 29 ist in radialer Richtung fluchtend mit der Wicklung 9 bzw. mit Teilen des Ankers 8 angeordnet und durch die fluchtende Anordnung der Lagerelemente 28,29 mit Teilen des Rotors ergibt sich eine geringe axiale Baulänge des Aggregates 1. Ferner ist von wesentlicher Bedeutung, daß die Achse mit einer ersten Lagerstelle in einer Bohrung des Pumpengehäuses 5 und mit einer zweiten Lagerstelle in dem Boden 4 des Motorengehäuses 3 abgestützt ist. Weil sich sowohl die Lagerstellen des Pumpenexzenters 18 als auch die Lagerstellen der Motorwelle 6 zwischen den beiden Lagerstellen der Achse befinden, erfolgt auch eine sichere und zuverlässige Abstützung der einwirkenden Kräfte mit der Folge, daß geringe Vibrationen und dadurch eine geringe Geräuschbelästigung vorliegt. Ferner erfolgt eine einfache Befestigung der Antriebseinheit 2 an dem Pumpengehäuse 5, weil die Achse mit dem Absatz 24 an dem Boden 4 des Motorengehäuses 3 angreift und sich mittelbar oder unmittelbar unter Zugbeanspruchung an dem Pumpengehäuse 5 abstützt.

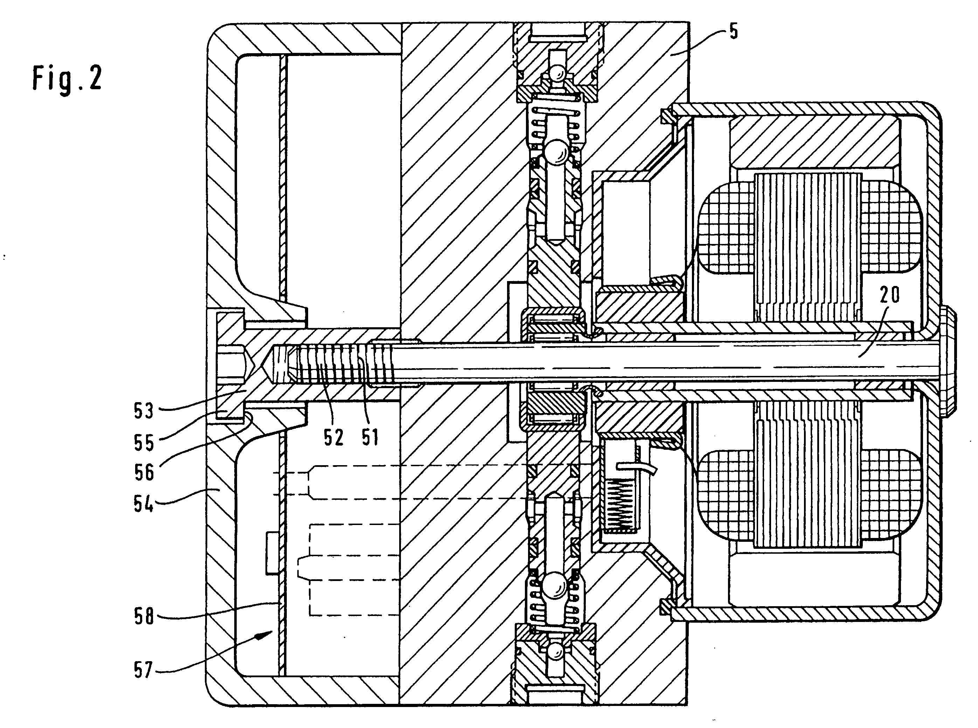

Fig. 2 unterscheidet sich im wesentlichen dadurch von Fig. 1, daß das Halteelement 20 das Pumpengehäuse 5 vollständig durchgreift und mit einem Gewinde 51 an dem Ende 52 in eine Gewindebuchse 53 eingreift, die sich an dem Deckel 54 abstützt. Wie die Figur zeigt, weist die Gewindebuchse 53 einen Bund 55 auf, welcher sich an einer Stufe 56 des Deckels 54 abstützt. Unter dem Deckel 54 befindet sich eine schematisch angedeutete Elektronikeinheit 57 mit einer Leiterplatte 58, die mit Elektronikbauteilen bestückt ist. Ferner sind in der Figur Steckerdurchführungen der Kohlebürsten durch das Pumpengehäuse 5 hindurch bis hin zu der Leiterplatte 58 schematisch angedeutet.

Wesentlich ist, daß die Achse quasi als Zuganker zwischen der Antriebseinheit 2 und dem Deckel 54 für die Elektronikeinheit 57 angeordnet ist und unter Zugbeanspruchung der Befestigung dieser beiden Baueinheiten an dem Pumpengehäuse 5 dient. Der Zapfen dient ferner zur Aufnahme der Querkräfte und Biegemomente, so daß die Motorwelle gewissermaßen querkraftfrei ist.

## Patentansprüche

1. Motorangetriebenes Aggregat (1) mit einer Motoreinheit (2) und mit einer Arbeitsmaschine umfassend eine Pumpe in einem Pumpengehäuse (5), wobei die Motoreinheit (2) einen drehbaren Rotor (7) mit einer Motorwelle (6) zum Antrieb mindestens eines Arbeitselementes (18) aufweist, und mit einem Halteelement zur Befestigung der Motoreinheit (2) am Pumpengehäuse (5), **dadurch gekennzeichnet, daß** das Halteelement (20) die Motorwelle (6) durchgreift sowie den Rotor (7) drehbar lagert.

2. Motorangetriebenes Aggregat nach Anspruch 1, **dadurch gekennzeichnet, daß** das lagernde Halteelement (20) zumindest einen Teil des Pumpengehäuses (5) durchgreift.

3. Motorangetriebenes Aggregat nach einem oder mehreren der vorhergehenden Ansprüche, **dadurch gekennzeichnet, daß** als Halteelement (20) eine zylindrische Achse vorgesehen ist.

4. Motorangetriebenes Aggregat nach einem oder mehreren der vorhergehenden Ansprüche, **dadurch gekennzeichnet, daß** ein Pumpenexzenter als Arbeitselement (20) vorgesehen ist, welcher drehfest mit der Motorwelle (6) verbundenen sowie auf der Achse gelagert ist.

5. Motorangetriebenes Aggregat nach einem oder mehreren der vorhergehenden Ansprüche, **dadurch gekennzeichnet, daß** die Motorwelle (6) rohrförmig ist und unter Zwischenordnung von Lagerelementen (28,29) drehbar auf der Achse angeordnet ist.

6. Motorangetriebenes Aggregat nach einem oder mehreren der vorhergehenden Ansprüche, **dadurch gekennzeichnet, daß** ein Lagerelement (28) in radialer Richtung fluchtend mit einem Kommutator (10) angeordnet ist.

7. Motorangetriebenes Aggregat nach einem oder mehreren der vorhergehenden Ansprüche, **dadurch gekennzeichnet, daß** ein Lagerelement (29) in radialer Richtung fluchtend mit einer Wicklung (9) angeordnet ist.

8. Motorangetriebenes Aggregat nach einem oder mehreren der vorhergehenden Ansprüche, **dadurch gekennzeichnet, daß** die Achse an einem Ende (21) mit einer ersten Lagerstelle in eine Bohrung des Pumpengehäuses (5) und mit einer zweiten Lagerstelle an dem anderen Ende (23) an dem Boden (4) des Motorengehäuses (3) abgestützt ist.

9. Motorangetriebenes Aggregat nach einem oder mehreren der vorhergehenden Ansprüche, **dadurch gekennzeichnet, daß** die Lagerelemente (28,29) der Motorwelle (6) und das Lagerelement (32) des Pumpenexzenters (18) zwischen den Lagerstellen der Achse angeordnet sind, so daß die auf die Achse einwirkenden Kräfte zwischen den Enden (21,23) angreifen.

10. Motorangetriebenes Aggregat nach einem oder mehreren der vorhergehenden Ansprüche, **dadurch gekennzeichnet, daß** die Achse mit einem Absatz (24) an dem Boden (4) des Elektromotorengehäuses (3) angreift und sich zur Befestigung des Elektromotors (2) an dem Pumpengehäuse (5) unter Zugbeanspruchung mittelbar oder unmittelbar an dem Gehäuse (5) abstützt.

## Claims

1. Motor-driven aggregate (1) with a motor unit (2) and a working machine comprising a pump in a pump housing (5), wherein the motor unit (2) includes a rotatable rotor (7) and a motor shaft (6) to drive at least one working element (18), and with a holding element to attach the motor unit (2) at the pump housing (5),
**characterized in that** the holding element (20) extends through the motor shaft (6) and the rotor (7) is pivotably mounted thereon.

2. Motor-driven aggregate as claimed in claim 1,
**characterized in that** the supporting holding element (20) extends through at least part of the pump housing (5).

3. Motor-driven aggregate as claimed in any one or more of the preceding claims,
**characterized in that** a cylindrical axle is provided as a holding element (20).

4. Motor-driven aggregate as claimed in any one or more of the preceding claims,
**characterized in that** there is provision of a pump eccentric as a working element (20) which is unrotatably connected to the motor shaft (6) and mounted on the axle.

5. Motor-driven aggregate as claimed in any one or more of the preceding claims,
**characterized in that** the motor shaft (6) is tubular and pivotably mounted on the axle, with bearing elements interposed (28, 29).

6. Motor-driven aggregate as claimed in any one or more of the preceding claims,
**characterized in that** a bearing element (28) is arranged so as to be in alignment with a commutator (10) in a radial direction.

7. Motor-driven aggregate as claimed in any one or more of the preceding claims,
**characterized in that** a bearing element (29) is arranged so as to be in alignment with a winding (9) in a radial direction.

8. Motor-driven aggregate as claimed in any one or more of the preceding claims,
**characterized in that** the axle at one end (21) is mounted with a first bearing in a bore of the pump housing (5) and is mounted with a second bearing at the other end (23) on the bottom (4) of the motor housing (3).

9. Motor-driven aggregate as claimed in any one or more of the preceding claims,
**characterized in that** the bearing elements (28, 29) of the motor shaft (6) and the bearing element (32) of the pump eccentric (18) are arranged between the bearings of the axle so that the forces applied to the axle act between the ends (21, 23).

10. Motor-driven aggregate as claimed in any one or more of the preceding claims,
**characterized in that** the axle bears with a step (24) against the bottom (4) of the electric motor housing (3) and is supported indirectly or directly under tensile load on the housing (5) for the attachment of the electric motor (2) to the pump housing (5).

## Revendications

1. Agrégat (1) commandé par moteur comportant une unité motrice (2) et une machine à travail prévue d'une pompe disposée dans un bâti de pompe (5), l'unité motrice (2) comportant un rotor (7) mobile ayant un arbre moteur (6) pour commander au moins un élément de travail (18), et comportant un élément de support pour fixer l'unité motrice (2) au bâti de pompe (5), **caractérisé en ce que** l'élément de support (20) se passe à travers de l'arbre moteur (6) en supportant le rotor (7) de manière rotative.

2. Agrégat (1) commandé par moteur selon la revendication 1, **caractérisé en ce que** l'élément de support (20) se passe au moins partiellement à travers du bâti de pompe (5).

3. Agrégat (1) commandé par moteur selon l'une ou plusieurs de revendications précédentes, **caractérisé en ce qu'**un axe cylindrique est prévu comme élément de support (20).

4. Agrégat (1) commandé par moteur selon l'une ou plusieurs de revendications précédentes, **caractérisé en ce qu'**un excentrique de pompe est prévu comme élément de travail (20), l'excentrique étant raccordé de manière non-rotative à l'arbre moteur (6) en étant supporté sur l'axe.

5. Agrégat (1) commandé par moteur selon l'une ou plusieurs de revendications précédentes, **caractérisé en ce que** l'arbre moteur (6) est sous forme tubulaire et, en entreposant des éléments de support (28,20), est disposé de manière rotative sur l'axe.

6. Agrégat (1) commandé par moteur selon l'une ou plusieurs de revendications précédentes, **caractérisé en ce qu'**un élément de support (28) est disposé en direction radiale en alignement avec un collecteur (10).

7. Agrégat (1) commandé par moteur selon l'une ou plusieurs de revendications précédentes, **caractérisé en ce qu'**un élément de support (29) est disposé en direction radiale en alignement avec un bobinage (9).

8. Agrégat (1) commandé par moteur selon l'une ou plusieurs de revendications précédentes, **caractérisé en ce que** l'axe à l'extrémité (21) est supporté par un point d'appuie premier dans un alésage du bâti de pompe (5), et à l'autre extrémité (23) est supporté par un point d'appui secondaire au fond (4) du bâti de moteur (3).

9. Agrégat (1) commandé par moteur selon l'une ou plusieurs de revendications précédentes, **caractérisé en ce que** les éléments de support (28, 29) de l'arbre moteur (6) et l'élément de support (32) de l'excentrique de pompe (18) sont disposés entre les points d'appui de l'axe de sorte que les forces exercées sur l'arbre rendent effet entre les extrémités (21,23).

10. Agrégat (1) commandé par moteur selon l'une ou plusieurs de revendications précédentes, **caractérisé en ce que** l'axe avec une section (24) se porte au fond (4) du bâti de moteur électrique (3) en s'appuyant directement ou indirectement au bâti (5) sous contrainte de traction pour fixer le moteur électrique (12) au bâti de pompe (5).
